# EUROPEAN PATENT APPLICATION

(11) **EP 1 670 283 A1**
(43) Date of publication of application: **14.06.2006**
(21) Application number: 04388087.1
(22) Date of filing: 08.12.2004
(51) Int. Cl.: H04R 5/033

(54) **Bluetooth headset**

(71) Applicant: Sony Ericsson Mobile Communications AB, 221 88 Lund (SE)
(72) Inventor: Barreiro-Lopez, José, 211 49 Malmö (SE)
(74) Representative: Boesen, Johnny Peder

(57) **Abstract**

The invention relates to an improvement of standard Bluetooth headset arranged to receive Bluetooth signals from e.g. a mobile telephone or PDA. The headset (100) according to the invention comprises a first loudspeaker (30) and emitter means (40) arranged to output a signal to a separate device (200) with a second loudspeaker (210). Such a separate device (200) could be a single earpiece or a single earphone arranged to be inserted into the ear of a user. The separate device (200) together with the headset (100) forms the system (300) according to the invention. With the system (300) according to the invention a user can experience audio signals transmitted into his/her two ears separately from the two loudspeakers (30; 210). It can be possible to transmit a stereo signal to the two ears of a user by means of the system (300).

## Description

### FIELD OF THE INVENTION

This invention relates to a headset comprising receiver means arranged to receive Bluetooth signals from an electronic device, processor means arranged to process received signals and to emit first processed signals to a first loudspeaker means arranged to emit audio signals upon reception of said first processed signals. The invention moreover relates to a system comprising a headset.

### BACKGROUND OF THE INVENTION

Headsets are widely used in connection with electronic equipment, such as mobile telephones, Personal Digital Assistants (PDAs), etc. Some headsets are connected to the electronic equipment by wire and others, so-called wireless headsets, are connected wirelessly, e.g. by means of Bluetooth technology. When using a wireless connection between the headset and the electronic equipment, the electronic equipment could be placed at a distance of up to at least some meters from the headset. To this end, a Bluetooth headset typically comprises some measures for manipulation of the electronic equipment, such as buttons or voice control to adjust the volume of sound in the headset, to initiate operations of the electronic equipment, such as answering an incoming call, making or ending a call, etc. Typically, wireless headsets comprise means for being placed attached to or placed on or they are arranged for being inserted into the ear of a user.

### OBJECT AND SUMMARY OF THE INVENTION

The invention is related to the realization of the disadvantageousness of current Bluetooth headsets only being arranged for emitting an audio signal into one ear of a user. Thus, the invention provides an improvement on current Bluetooth headsets, in that the headset of the opening paragraph is characterized in further comprising an emitter means for emitting a second processed signal to a separate device comprising a second loudspeaker means arranged to emit a second audio signal. Since the headset according to the invention is arranged for emitting two audio signals to two loudspeaker means, it is possible to have an audio signal for each ear of a user. In use, the headset according to the invention is typically placed in a way so that the first loudspeaker means therein are in close vicinity to or inside an ear of the user, whilst emitting the second processed signal to a second loudspeaker means, which typically is arranged to be placed in close vicinity to or inside the other ear of the user. In the above, it is understood that the headset according to the invention comprises means for processing the received signal to the second processed signals emitted by the second emitter. Advantageously, these means for processing could be the processor means. Moreover, it is also conceivable that the first and the second processed signals are identical. It should be noted that the term "first loudspeaker means" is meant to cover any loudspeaker means incorporated in or in fixed connection with the headset. Furthermore, the term "emitter means" is meant to cover any means for emitting, transmitting or sending a signal, irrespective of whether the signal emitted/transmitted/sent is an electrical signal sent via a cable or a radiofrequency (RF) signal, a Bluetooth signal or other wireless signals sent via the air. Finally, throughout this specification it is to be understood that the first/second loudspeaker means is arranged to transform the first/second processed signal to a first/second audio signal in a way well-known in the art.

In a preferred embodiment, said emitter means is a wireless emitter arranged to emit the second processed signals wirelessly. For instance, said wireless emitter could be a Bluetooth emitter. Alternatively, said emitter means comprises a mechanical connector. Such a mechanical connector could be any appropriate connector, such as e.g. 2.5 mm jack.

Preferably, the first processed signal and the second processed signal are arranged to make the first loudspeaker means and the second loudspeaker means form a stereo audio signal. Thus, when the first processed signal is sent to the first loudspeaker means and the second processed signal is sent to the second loudspeaker means, a user having the first loudspeaker means emitting audio signals to one ear and the second loudspeaker means emitting audio signals to the other ear will experience a stereo signal. This is especially advantageous, when the electronic equipment is arranged to playing back music, for instance when the electronic equipment comprises MP3-player facilities.

The invention moreover relates to a system comprising a headset according to the above and a separate device comprising a second loudspeaker means arranged to emit a second audio signal. The system provides advantages similar to the advantages described above in relation to the headset alone.

Preferably, the separate device in the system according to the invention is one of the following: a single earphone, a single earpiece, a single ear bud, which are example of devices comprising a single loudspeaker arranged to be inserted into or placed in the vicinity of a single ear of a user.

Preferably, the separate device is arranged to receive said second processed signals wirelessly. Thus, the separate device could be a Bluetooth single earpiece, a Bluetooth single ear bud or a Bluetooth single earphone. Alternatively, other wireless separate devices could be used, such as a device receiving the second processed signals via RF or other appropriate wireless transmission methods.

Moreover, the separate device could advantageously be arranged to receive said second processed signals via a mechanical connector. Thus, the separate device would be provided with a cable or wire and a jack to be inserted into the headset. Hereby, a relatively cheap separate device is achievable.

The electronic equipment, from which the Bluetooth headset receives Bluetooth signals, could be a mobile telephone or any portable radio communications device, a PDA, an MP3-player, etc.

### BRIEF DESCRIPTION OF THE DRAWINGS

The invention will be explained more fully below in connection with an example of a preferred embodiment and with reference to the drawing, in which:
Fig. 1 shows a schematic block diagram of the headset according to the invention.
Fig. 2 shows a schematic block diagram of the system according to the invention.
Figs. 3a and 3b show schematic drawings of an embodiment of the headset according to the invention and an embodiment of the system according to the invention, respectively.

Throughout the figures, like components are denoted by means of like reference numbers.

### DESCRIPTION OF PREFERRED EMBODIMENTS

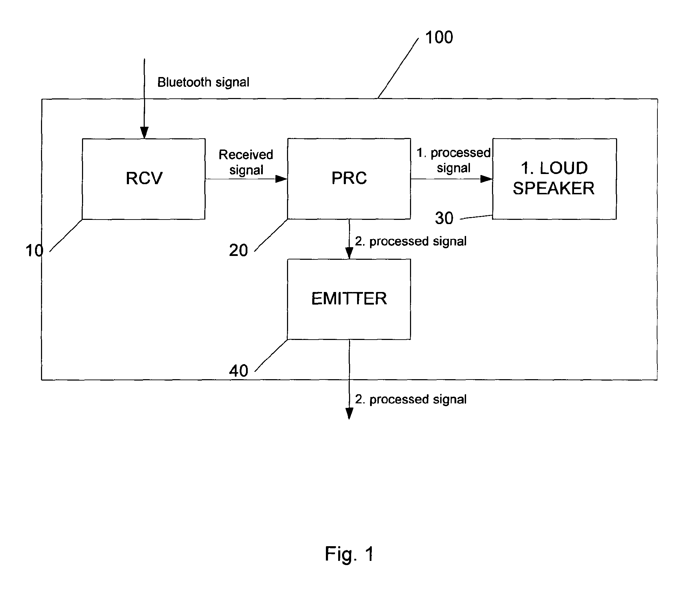

Fig. 1 shows a schematic block diagram of the system according to the invention, comprising a headset 100 according to the invention. The headset 100 comprises a receiver 10 arranged to receive Bluetooth signals from an electronic equipment (not shown). The receiver 10 is arranged to transmit the received signal to a processor 20 that is arranged to, after processing of the signal, transmit a first processed signal to a first loudspeaker 30 and a second processed signal to an emitter 40 in the headset 100. The emitter 40 could be a wireless emitter, such as a Bluetooth emitter, or a mechanical connector, such a jack, e.g. a 2.5 mm jack.

Only the components of the headset 100 essential to the understanding of the invention are shown in Fig. 1. The headset 100 comprises additional components essential to the functioning thereof, such as a transceiver chip arranged to facilitate the transmittal/reception of signals to/from the electronic device, controls or measures for manipulating the headset and/or the electronic device, means for attaching the headset to the ear of a user, etc. However, the processor means 20 typically could be a part of such a transceiver chip or vice versa.

Moreover, it is conceivable, that the headset comprises two (or more) processor means and that the receiver could transmit the received signal to two distinct processor means, whereof one is arranged to transmit a first processed signal to a loudspeaker and the other is arranged to transmit a second processed signal to the emitter means of the headset for further transmittal to a device with a loudspeaker.

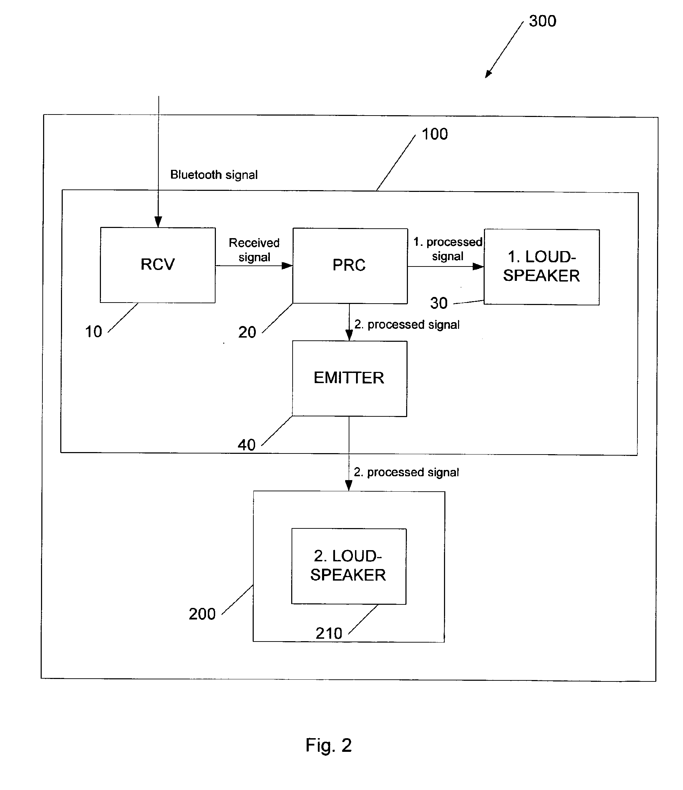

As mentioned above, the first and second processed signals are arranged to make the first loudspeaker means and the second loudspeaker means form a stereo audio signal. However, to form a proper stereo signal, the above typically would presuppose that the Bluetooth signal received by the Bluetooth headset 100 supports stereo emission. In this case, the processor means 20 could be arranged to process the received signal to a processed signal arranged to make the first loudspeaker 30 emit a mono signal in case of no connection between the headset 100 and a separate device 200 with a second loudspeaker 210 (see Fig. 2), and/or to process the received signal to a processed signal arranged to make the first loudspeaker 30 and a second loudspeaker 210 emit a stereo signal in conjunction, in case of a connection between the headset 100 and a separate device 200 with a second loudspeaker 210 (see Fig. 2).

Fig. 2 shows a schematic block diagram of the system 300 according to the invention. The system 300 contains the headset 100 as described above and shown in Fig. 1 and a separate device 200. As noted above, the receiver 10 of the headset 100 is arranged to receive a Bluetooth signal from an electronic device and to emit the received signal to a processor means 20. The processor means 20 is arranged to emit a first processed signal to a first loudspeaker 30 in the headset 100 and to emit a second processed signal to the separate device 200 by means of the emitter 40. The separate device 200 comprises a second loudspeaker 210 and possibly additional components (not shown) for receiving the second processed signal and for transmitting it to the second loudspeaker 210. The second loudspeaker 210 could be the loudspeaker of an earpiece, and the second processed signal could be transmitted via a cable of the separate device 200 being connected to the emitter 40. In this case, the emitter 40 typically could a standard jack, e.g. a 2.5 mm jack. This has the advantage of being a standard connection and that the separate devices 200 can be a passive device without an integrated energy source. However, the second processed signal could be transmitted via air, e.g. as a Bluetooth signal or an RF signal, and in this case the emitter would be a Bluetooth emitter or an emitter of RF signals.

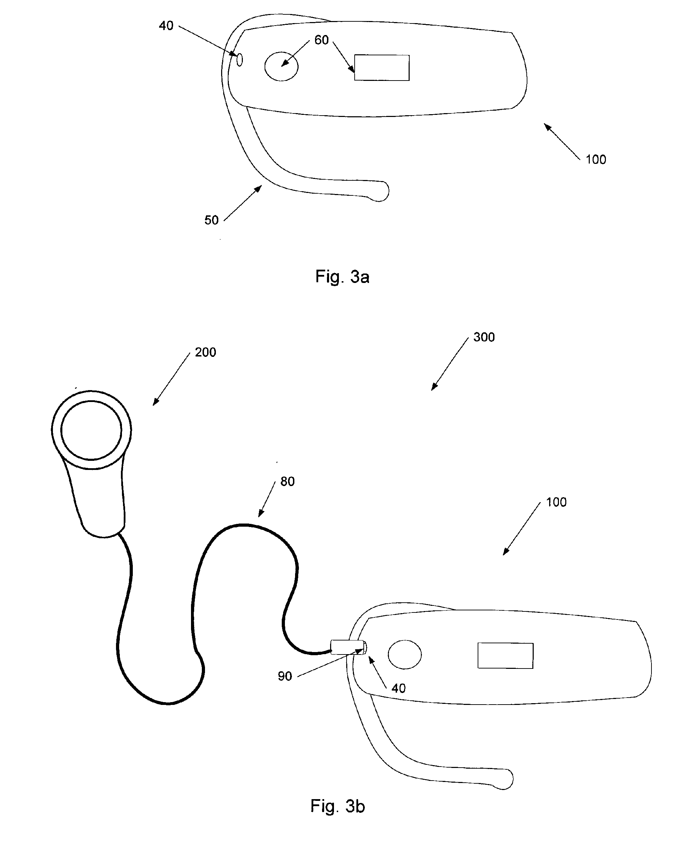

Figs. 3a and 3b show schematic drawings of an embodiment of the headset 100 according to the invention and an embodiment of the system 300 according to the invention, respectively.

In Fig. 3a, the headset 100 is shown to comprise means 50 for attachment of the headset to the ear of a user. Said attachment means 50 is a strap or a brace arranged to be placed behind the ear of a user. The headset 100 moreover comprises manipulation means 60, e.g. for regulating the volume of the audio output from the first loudspeaker (not shown in Fig. 3a) of the headset 100. Also shown is the emitter means 40 in the form of a jack into which a mechanical connector can be inserted.

In Fig. 3b, the system 300 is shown to comprise the headset 100 according to the invention and a separate device 200 in the form of a single earpiece or a single earphone. The single earpiece/single earphone comprises a single loudspeaker and is arranged to be inserted into or placed in the vicinity of one ear of a user. The single earpiece/single earphone comprises a cable 80, whereof one end is connected to the earpiece 200 and the other end is provided with a mechanical connector 90 inserted into the jack 40.

Alternatively, the separate device 200 could be arranged to receive said second processed signals wirelessly, e.g. via Bluetooth or RF signals, in which case the separate device 200 would not comprise a cable 80. Instead the separate device 200 would comprise means (not shown) for receiving said second processed signals wirelessly.

It should be emphasised that the term "comprises/comprising" when used in this specification is taken to specify the presence of stated features, integers or components but does not preclude the presence of addition of one or more other features, integers or components or groups thereof.

## Claims

1. A headset (100) comprising receiver means (10) arranged to receive Bluetooth signals from an electronic device, processor means (20) arranged to process received signals and to emit first processed signals to a first loudspeaker means (30) arranged to emit audio signals upon reception of said first processed signals, **characterized in that** said headset (100) further comprises emitter means (40) for emitting a second processed signal to a separate device (200) comprising a second loudspeaker means arranged to emit a second audio signal.

2. A headset (100) according to claim 1, **characterized in that** said emitter means (40) is a wireless emitter arranged to emit said second processed signal wirelessly.

3. A headset (100) according to claim 2, **characterized in that** said wireless emitter is a Bluetooth emitter or an emitter of radiofrequency (RF) signals.

4. A headset (100) according to claim 1, **characterized in that** said emitter means (40) comprises a mechanical connector.

5. A headset (100) according to any of the claims 1 to 4, **characterized in that** said the first processed signal and said second processed signal are arranged to make the first loudspeaker means (30) and the second loudspeaker means form a stereo audio signal.

6. A system (300) comprising a headset (100) according to any of the claims 1 to 5, **characterized in** further comprising a separate device (200) arranged to receive second processed signals and comprising a second loudspeaker means (210) arranged to emit a second audio signal upon reception of said second processed signals.

7. A system (300) according to claim 6, **characterized in that** the separate device (200) is one of the following: a single earphone, a single earpiece, a single ear bud.

8. A system (300) according to claim 7, **characterized in that** the separate device (200) is arranged to receive said second processed signals wirelessly.

9. A system (300) according to claim 7, **characterized in that** the separate device (200) is arranged to receive said second processed signals via a mechanical connector.
